# EUROPEAN PATENT SPECIFICATION

(11) **EP 4 151 791 B1**
(45) Date of publication and mention of the grant of the patent: **18.02.2026**
(21) Application number: 22195083.5
(22) Date of filing: 12.09.2022
(51) Int. Cl.: D05B 13/02

(54) **AN OUTER LAYER STRUCTURE OF A STUFFED OBJECT AND A SEWING METHOD THEREOF**
AUSSENSCHICHTSTRUKTUR EINES GEFÜLLTEN OBJEKTS UND NÄHVERFAHREN DAFÜR
STRUCTURE DE COUCHE EXTERNE D'UN OBJET REMBOURRÉ ET SON PROCÉDÉ DE COUTURE

(30) Priority: 17.09.2021 CN 202111093578
(43) Date of publication of application: 22.03.2023
(73) Proprietor: Pei-Ting, Chung, Taipei City 110 (TW)
(72) Inventor: Pei-Ting, Chung, Taipei City 110 (TW)
(74) Representative: Manitz Finsterwald Patent- und Rechtsanwaltspartnerschaft mbB

(56) References cited:
- US-A1- 2002 119 728
- US-A1- 2009 071 411
- CONGABAEREN: "#81 Doppelte Zaubernaht (das Original), doppelter Matratzen-/Leiterstich - double invisible stitch", 4 June 2016 (2016-06-04), XP093020552, Retrieved from the Internet <URL:https://www.youtube.com/watch?v=btAcLrsPvhA> [retrieved on 20230203]
- A.R.T.'S REAL REPAIRS FOR REAL CUSTOMERS: "Double Needle Blind Stitch Part 1 - Cloth v13", 14 May 2019 (2019-05-14), XP093020556, Retrieved from the Internet <URL:https://www.youtube.com/watch?v=EclUQiEcTys> [retrieved on 20230203]

## Description

### RELATED APPLICATIONS

The present application claims the priority of Chinese Application No. 202111093578.2, filed September 17, 2021.

### BACKGROUND OF THE INVENTION

### 1. FIELD OF THE INVENTION

The present invention relates to a sewing technology, and, more particularly, to an outer layer structure for increasing the strength at a stitching position of a stuffed object and a sewing method of the outer layer structure.

### 2. DESCRIPTION OF THE RELATED ART

For common stuffed objects, such as stuffed toys, the outer layers are made of cloths, artificial fibers or leather. A predetermined shape (such as various animals, plants or insects) is made by sewing the outer layer and an accommodation space for fillers is reserved inside the outer layer. The accommodation space can be filled by fillers, such as piles, foamed plastic particles or other particles. The outer layer is supported by the fillers so the stuffed toy would be more three-dimensional and its tactility would be better.

However, in the sewing technology, there is generally only one process to stitch two or more pieces of outer layers of stuffed toys together. No matter by machine sewing or hand sewing, there are certain limitations on the sewing strength. Therefore, after using the stuffed toy for a period of time, seam slippages or broken stitches would occur at the position with weaker seam, which results in an open seam and the fillers inside would be dropping out. If the open seams are not repaired properly, the function and quality of the stuffed toy would be greatly reduced and the resource of that is also wasted. Prior art examples of closing the seams in stuffed toys are disclosed in US 2009 071411 A1 and US 2002 119728 A1.

Besides, the stuffed toys have various usages. In addition to being entertaining for humans, they can also entertain pets. For example, the stuffed toys for dogs usually don't have a long service life because of the dog's dentition structure and the powerful biting force. Once the stuffed toys are torn and cannot be repaired, they must be discarded. That is not economical or environmental friendly.

Therefore, how to provide a technology for increasing the strength at the stitching positions of the stuffed object to enhance the durability has become an urgent problem to be solved in the industry.

### SUMMARY OF THE INVENTION

The purpose of the present invention is to provide a technology for increasing the strength at the stitching positions of the stuffed object to enhance the durability.

In light of solving the foregoing problems of the prior art, the present invention provides an outer layer structure of a stuffed object as defined by claim 1, comprising: at least one first fabric component and at least one second fabric component fastened to each other substantially to form a container which has an accommodation space inside the container and a predetermined shape is defined by an outer surface of the container; the container further comprises an opening connected with the accommodation space, wherein the opening comprises: a first edge located on a side of the first fabric component and having a first end and a second end; and a second edge located on a side of the second fabric component and having a first end and a second end, and the second edge corresponds to the first edge to form the opening, wherein the opening has a first end and a second end; wherein the first end of the first edge corresponds to the first end of the second edge and the first end of the opening is formed by fastening the first end of the first edge to the first end of the second edge, and the second end of the first edge corresponds to the second end of the second edge and the second end of the opening is formed by fastening the second end of the first edge to the second end of the second edge; a first stitching thread extended from the first end of the opening to the second end of the opening so the first edge and the second edge corresponds to each other and the opening is stitched and fastened by the first stitching thread, and thereby a first seam is formed at the opening, wherein the first seam comprises: a third edge located on the first fabric component near the first edge and having a first end and a second end; and a fourth edge located on the second fabric component near the second edge and having a first end and a second end, and the fourth edge corresponds to the third edge, wherein the first end of the third edge corresponds to the first end of the fourth edge, and the first end of the third edge and the first end of the fourth edge are fastened to each other, and the second end of the third edge corresponds to the second end of the fourth edge, and the second end of the third edge and the second end of the fourth edge are fastened to each other; and a second stitching thread extended from the first end of the third edge or the first end of the fourth edge to the second end of the third edge or the second end of the fourth edge so the third edge corresponds to the fourth edge, and the third edge and the fourth edge are stitched and fastened to each other to form a second seam. The first stitching thread and the second stitching thread are provided in sequence.

In an embodiment, the first fabric component comprises an n-th inputting needle point and an n-th outputting needle point near the first edge, wherein n is a positive integer greater than 0, and the second fabric component comprises an m-th inputting needle point and an m-th outputting needle point near the second edge, wherein m is a positive integer greater than 0, wherein when n is equal to m, the n-th inputting needle point near the first edge corresponds to the m-th outputting needle point near the second edge and the m-th inputting needle point near the second edge corresponds to the n-th outputting needle point near the first edge.

In an embodiment, the n-th inputting needle point and the n-th outputting needle point near the first edge are interlaced and intervallic arranged with each other, wherein n is a positive integer greater than 0 and a first inputting needle point near the first edge is near the first end of the first edge.

In an embodiment, the m-th inputting needle point and the m-th outputting needle point near the second edge are interlaced and intervallic arranged with each other, wherein m is a positive integer greater than 0 and a first outputting needle point near the second edge is near the first end of the second edge.

In an embodiment, the first stitching thread sequentially draws through the first inputting needle point near the first edge, the first outputting needle point near the second edge, the first inputting needle point near the second edge, the first outputting needle point near the first edge, the second inputting needle point near the first edge, the second outputting needle point near the second edge, the second inputting needle point near the second edge, the second outputting needle point near the first edge,..., the n-th inputting needle point near the first edge, the m-th outputting needle point near the second edge, the m-th inputting needle point near the second edge, the n-th outputting needle point near the first edge, wherein n is a positive integer greater than 2 and m is a positive integer greater than 2.

In an embodiment, the first fabric component comprises a p-th inputting needle point and a p-th outputting needle point near the third edge, wherein p is a positive integer greater than 0, and the second fabric component comprises a q-th inputting needle point and a q-th outputting needle point near the fourth edge, wherein q is a positive integer greater than 0, wherein when p is equal to q, the p-th outputting needle point near the third edge corresponds to the q-th inputting needle point near the fourth edge and the q-th outputting needle point near the fourth edge corresponds to the (p+1)-th inputting needle point near the third edge.

In an embodiment, the p-th inputting needle point and the p-th outputting needle point near the third edge are interlaced and intervallic arranged with each other, wherein p is a positive integer greater than 0 and a first inputting needle point near the third edge is near the first end of the third edge.

In an embodiment, the q-th inputting needle point and the q-th outputting needle point near the fourth edge are interlaced and intervallic arranged with each other, wherein q is a positive integer greater than 0 and a first inputting needle point near the fourth edge is near the first end of the fourth edge.

In an embodiment, the second stitching thread sequentially draws through the first inputting needle point near the third edge, the first outputting needle point near the third edge, the first inputting needle point near the fourth edge, the first outputting needle point near the fourth edge, the second inputting needle point near the third edge, the second outputting needle point near the third edge, the second inputting needle point near the fourth edge, the second outputting needle point near the fourth edge,..., the p-th outputting needle point near the third edge, the q-th inputting needle point near the fourth edge, the q-th outputting needle point near the fourth edge, the (p+1)-th inputting needle point near the fourth edge, wherein p is a positive integer greater than 2 and q is a positive integer greater than 2.

In an embodiment, after the second stitching thread sequentially draws through the p-th outputting needle point near the third edge, the second stitching thread draws through the q-th inputting needle point near the fourth edge, and then draws through the q-th outputting needle point near the fourth edge, wherein p is a positive integer greater than 2 and q is a positive integer greater than 2.

In an embodiment, the third edge comprises a p-th inputting needle point and a p-th outputting needle point, wherein p is a positive integer greater than 0, and the fourth edge comprises a q-th inputting needle point and a q-th outputting needle point, wherein q is a positive integer greater than 0, wherein when p is equal to q, the p-th inputting needle point near the third edge corresponds to the q-th outputting needle point near the fourth edge and the q-th inputting needle point near the fourth edge corresponds to the p-th outputting needle point near the third edge.

In an embodiment, the p-th inputting needle point and the p-th outputting needle point near the third edge are interlaced and intervallic arranged with each other, wherein p is a positive integer greater than 0 and a first inputting needle point near the third edge is near the first end of the third edge.

In an embodiment, the q-th inputting needle point and the q-th outputting needle point near the fourth edge are interlaced and intervallic arranged with each other, wherein q is a positive integer greater than 0 and a first outputting needle point near the fourth edge is near the first end of the fourth edge.

In an embodiment, the second stitching thread sequentially draws through the first inputting needle point near the third edge, the first outputting needle point near the fourth edge, the first inputting needle point near the fourth edge, the first outputting needle point near the third edge, the second inputting needle point near the third edge, the second outputting needle point near the fourth edge, the second inputting needle point near the fourth edge, the second outputting needle point near the third edge,..., the p-th inputting needle point near the third edge, the q-th outputting needle point near the fourth edge, the q-th inputting needle point near the fourth edge, the p-th outputting needle point near the third edge, wherein p is a positive integer greater than 2 and q is a positive integer greater than 2.

In an embodiment, the second stitching thread further forms a bar-tack structure between the first outputting needle point near the fourth edge and the first inputting needle point near the fourth edge.

In an embodiment, the vertical distance between the first stitching thread and the first edge or the second edge is between 1 mm and 5 mm.

In an embodiment, the vertical distance between the second stitching thread and the third edge or the fourth edge is between 1 mm and 5 mm.

In an embodiment, the distance between the n-th inputting needle point near the first edge and the n-th outputting needle point near the first edge is between 1 mm and 5 mm.

In an embodiment, the distance between the m-th inputting needle point near the second edge and the m-th outputting needle point near the second edge is between 1 mm and 5 mm.

In light of solving the foregoing problems of the prior art, the present invention provides a sewing method of an outer layer structure of a stuffed object as defined by claim 15, comprising: sewing partially along a periphery of at least one first fabric component and a periphery of at least one second fabric component to form a container which has an accommodation space inside the container; forming an opening at a unsewn portion between the periphery of the at least one first fabric component and the periphery of the at least one second fabric component, wherein the opening is connected with the accommodation space and the opening comprises a first edge and a second edge, wherein the first edge is located on a side of the first fabric component and has a first end and a second end; and the second edge is located on a side of the second fabric component and has a first end and a second end, and the second edge corresponds to the first edge to form the opening, wherein the opening has a first end and a second end; extending a first stitching thread from the first end of the opening to the second end of the opening so the first edge and the second edge corresponds to each other and the opening is stitched and fastened to form a first seam at the opening, wherein the first seam comprises a third edge and a fourth edge, wherein the third edge is located on the first fabric component near the first edge and has a first end and a second end, wherein the third edge is substantially parallel to the first edge; and the fourth edge is located on the second fabric component near the second edge and has a first end and a second end, wherein the fourth edge is substantially parallel to the second edge and the fourth edge corresponds to the third edge; and in sequence extending a second stitching thread from the first end of the third edge or the first end of the fourth edge to the second end of the third edge or the second end of the fourth edge so the third edge corresponds to the fourth edge, and the third edge and the fourth edge are stitched and fastened to each other to form a second seam.

Compared to the prior art, the stuffed object made by using the outer layer structure of the stuffed object and the sewing method thereof according to the present invention are able to increase the strength at the stitching positions of the stuffed object to enhance the durability of the stuffed object. In addition to being entertaining for humans, the stuffed object applying the present invention are more suitable for pets, such as dogs or cats, based on the great tolerance of biting and pulling.

### BRIEF DESCRIPTION OF THE DRAWINGS

FIG. 1 illustrates a structural schematic view of an opening according to a illustrative embodiment of the present invention.
FIG. 2 illustrates a structural schematic view of inputting/outputting needle points used for a first stitching thread according to a illustrative embodiment of the present invention.
FIG. 3 illustrates a structural schematic view of formation of a first seam according to a illustrative embodiment of the present invention.
FIG. 4 illustrates a structural schematic view of inputting/outputting needle points used for a second stitching thread according to a illustrative embodiment of the present invention.
FIG. 5 illustrates a structural schematic view of inputting/outputting needle points used for a second stitching thread according to another illustrative embodiment of the present invention.
FIG. 6 illustrates a structural schematic view of formation of a second seam according to a illustrative embodiment of the present invention.
FIG. 7 illustrates a flow diagram of a sewing method according to a illustrative embodiment of the present invention.

### DETAILED DESCRIPTION

The present invention is described by the following specific embodiments. Those with ordinary skills in the arts can readily understand other advantages and functions of the present invention after reading the disclosure of this specification.

The structures, scales and sizes showed in the appended drawings of the present invention are only used to illustrate with the disclosure of this specification for those with ordinary skills in the arts, and not restrictive of the scope of the present invention so they do not represent the substantial technical implication. The terms, such as on, inside, outside, bottom and one, in this specification are only to describe conveniently for clarify, and not restrictive of the scope of the present invention.

An outer layer structure of the stuffed object and a sewing method thereof according to the present invention could be applied to stuffed toys. More specifically, various materials or textile materials could be used for the outer layers of the stuffed toys. An accommodation space is formed inside the outer layer and can be filled by fluffy items, such as piles, cotton flock or artificial fibers so the stuffed toy is three-dimensional and has a fluffy and soft tactility. The outer layer structure of the stuffed object according to the present invention is not limited to be used for the stuffed toys. It is also suitable for the sewing structure modification on other stuffed objects.

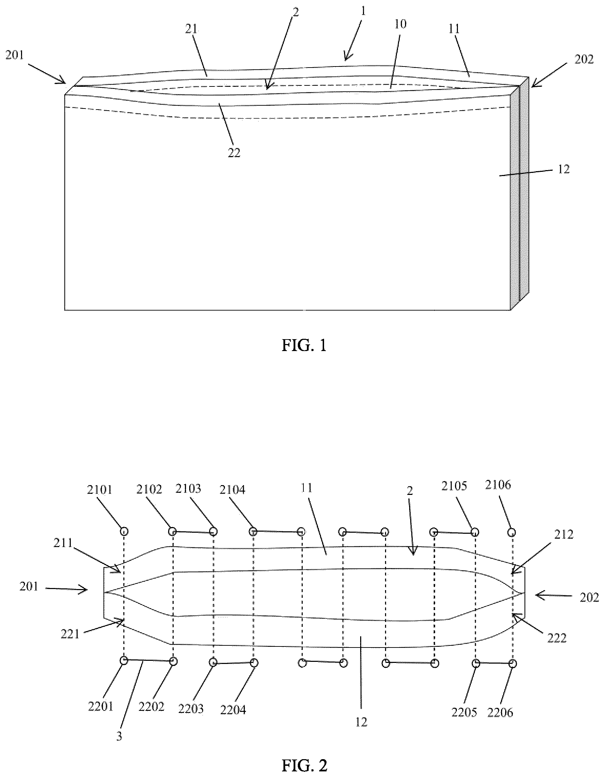

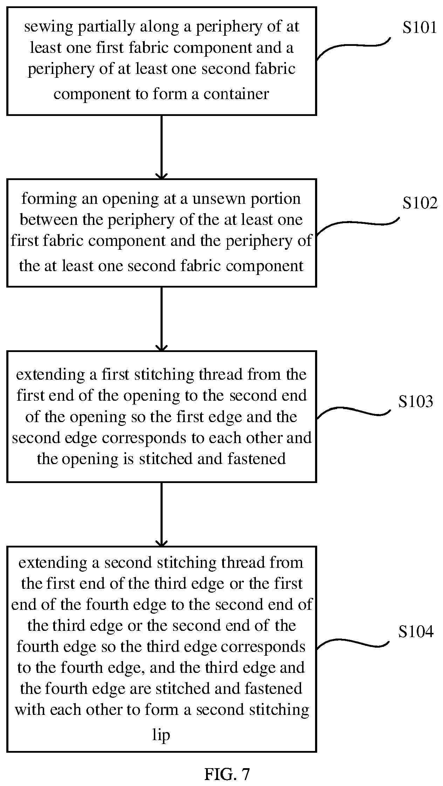

Please refer to FIG. 1. FIG. 1 illustrates a structural schematic view of a illustrative embodiment of the present invention to show the structure of the stuffed object which is not sewn by a first stitching thread and a second stitching thread. An outer layer structure of a stuffed object and a sewing method thereof according to the present invention could be applied to the stuffed toys. As shown in FIG. 1, the stuffed toy comprises a first fabric component 11 and a second fabric component 12. It needs to say specifically that the stuffed toy could comprise a plurality of first fabric components 11 or a plurality of second fabric components 12 in other embodiments. A container 1 is formed by sewing partially along a periphery of the first fabric component 11 and a periphery of the second fabric component 12 to fasten to each other substantially (S101, as shown in FIG. 7). In this embodiment, the container 1 is a main body of the stuffed toy. A container 1 has an accommodation space 10 inside the container 1 and the accommodation space 10 cloud be filled by cotton, cotton fabrics, polyester fiber fillers, particles of various materials, voiced paper, air bags which could be pressed for sound, air bags which could be pressed for silent, motional air bags, dynamic air bags (not shown in the drawings), etc. In this embodiment, a predetermined shape is defined by an outer surface of the container 1. As shown in FIG. 1, the outer surface of the container 1 could be the various shapes of animals, plants or insects, but not limited thereto.

The container 1 further comprises an opening 2 connected with the accommodation space 10 so the fillers are easy to be stuffed into the accommodation space 10 through the opening 2 by manufacturing people or machine equipment of stuffed toys. In a better embodiment, the opening 2 could make the fillers enter the container 1 and connect with the accommodation space 10.

Please refer to FIG. 1 and FIG. 2 together. The opening 2 further may comprise a first edge 21 and a second edge 22. The first edge 21 may be located on a side of the first fabric component 11 and have a first end 211 and a second end 212. The second edge 22 may be located on a side of the second fabric component 12 and have a first end 221 and a second end 222. In this embodiment, the opening 2 is formed by the second edge 22 and the corresponding first edge 21 (S102, as shown in FIG. 7). As shown in FIG. 2, in this embodiment, the opening 2 further may have a first end 201 and a second end 202. The first end 211 of the first edge 21 corresponds to the first end 221 of the second edge 22 and the first end 201 of the opening 2 is formed by fastening the first end 211 of the first edge 21 to the first end 221 of the second edge 22. The second end 212 of the first edge 21 corresponds to the second end 222 of the second edge 22 and the second end 202 of the opening 2 is formed by fastening the second end 212 of the first edge 21 to the second end 222 of the second edge 22. In this embodiment, a thread could fasten the first end 211 of the first edge 21 to the corresponding first end 221 of the second edge 22 through machine sewing or hand sewing. In the same way, a thread could also fasten the second end 212 of the first edge 21 to the corresponding second end 222 of the second edge 22.

After the fillers are stuffed into the accommodation space 10 through the opening 2, it needs to stitch and seal the opening 2 by a first stitching thread 3 and a second stitching thread 4 in sequence to avoid the fillers disengagement or dropping out from the opening 2.

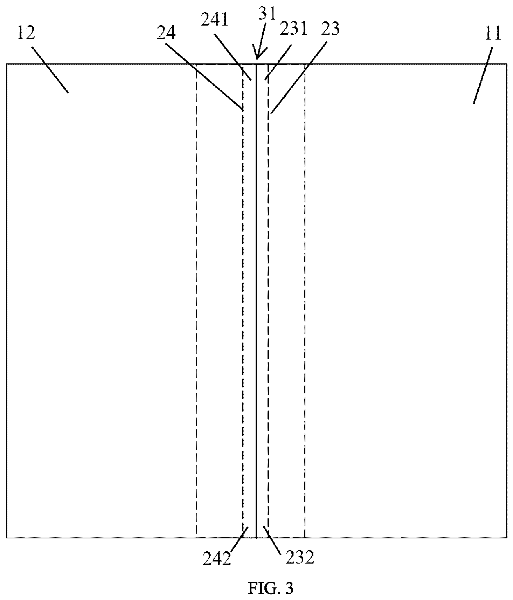

Please refer to FIG. 2. In more detail, in an embodiment of the present invention, the first stitching thread 3 could sequentially draw through the first inputting needle point 2101 near the first edge 21, the first outputting needle point 2201 near the second edge 22, the first inputting needle point 2202 near the second edge 22, the first outputting needle point 2102 near the first edge 21, the second inputting needle point 2103 near the first edge 21, the second outputting needle point 2203 near the second edge 22, the second inputting needle point 2204 near the second edge 22, the second outputting needle point 2104 near the first edge 21 and so on. Until the first stitching thread 3 sequentially draws through the n-th inputting needle point 2105 near the first edge 21, the m-th outputting needle point 2205 near the second edge 22, the m-th inputting needle point 2206 near the second edge 22, the n-th outputting needle point 2106 near the first edge 21, a first seam 31 shown in FIG. 3 is formed at the opening 2.

The multiple said inputting needle points and outputting needle points near the first edge 21 and the second edge 22 for the first stitching thread 3 to draw in sequence are summarized into the following order of arrangement. Namely, the first edge 21 comprises the n-th inputting needle point and the n-th outputting needle point, wherein n may be a positive integer greater than 0, and the second edge 22 comprises the m-th inputting needle point and the m-th outputting needle point, wherein m may be a positive integer greater than 0, wherein when n is equal to m, the n-th inputting needle point near the first edge 21 corresponds to the m-th outputting needle point near the second edge 22 and the m-th inputting needle point near the second edge 22 corresponds to the n-th outputting needle point near the first edge 21.

In a better embodiment, the n-th inputting needle point and the n-th outputting needle point near the first edge 21 are interlaced and intervallic arranged with each other, wherein n may be a positive integer greater than 0 and the first inputting needle point near the first edge 21 is near outside or inside of the first end of the first edge 21. Relatively, in this embodiment, the m-th inputting needle point and the m-th outputting needle point near the second edge 22 are interlaced and intervallic arranged with each other, wherein m may be a positive integer greater than 0 and the first outputting needle point near the second edge 22 is near outside or inside of the first end of the second edge 22.

As mentioned above, by using said structure of the multiple inputting needle points and outputting needle points near the first edge 21 and the second edge 22 and the first stitching thread 3, the first stitching thread 3 is extended from the first end 211 of the first edge 21,or the outside or inside of the first end 211, or the first end 221 of the second edge 22, or the outside or inside of the first end 221 to the second end 212 of the first edge 21, or the outside or inside of the second end 212, or the second end 222 of the second edge 22, or the outside or inside of the second end 222 so the first edge 21 and the second edge 22 correspond and are fastened to each other to form the first seam 31 (S103, as shown in FIG. 7)

In a better embodiment, the vertical distance between the first stitching thread 3 and the first edge 21 or the second edge 22 may be between 1 mm and 5 mm, but not limited thereto. The vertical distance between the first stitching thread 3 and the first edge 21 or the second edge 22 could be adjusted according to actual requirements.

In a better embodiment, the distance between the n-th inputting needle point near the first edge 21 and the n-th outputting needle point near the first edge 21 may be between 1 mm and 5 mm, but not limited thereto. The distance between the n-th inputting needle point near the first edge 21 and the n-th outputting needle point near the first edge 21 could be adjusted according to actual requirements.

In a better embodiment, the distance between the m-th inputting needle point near the second edge 22 and the m-th outputting needle point near the second edge 22 may be between 1 mm and 5 mm, but not limited thereto. The distance between the m-th inputting needle point near the second edge 22 and the m-th outputting needle point near the second edge 22 could be adjusted according to actual requirements.

In an embodiment of the present invention, the first seam 31 further comprises a third edge 23 and a fourth edge 24. The third edge 23 may be located on the first fabric component 11 near the first edge 21 and have a first end 231 and a second end 232. In a better embodiment, the third edge 23 may be substantially parallel to the first edge 21, but not limited thereto. The fourth edge 24 may be located on the second fabric component 12 near the second edge 22 and have a first end 241 and a second end 242. In a better embodiment, the fourth edge 24 may be substantially parallel to the second edge 22, but not limited thereto. In a best embodiment, the fourth edge 24 corresponds to the third edge 23.

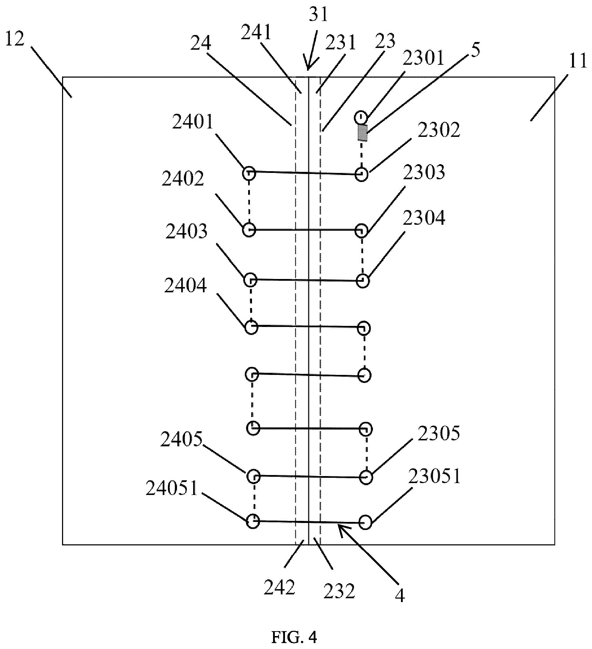

Please refer to FIG. 4. In this embodiment, the second stitching thread 4 could sequentially draw through the first inputting needle point 2301 near the third edge 23, the first outputting needle point 2302 near the third edge 23, the first inputting needle point 2401 near the fourth edge 24, the first outputting needle point 2402 near the fourth edge 24, the second inputting needle point 2303 near the third edge 23, the second outputting needle point 2304 near the third edge 23, the second inputting needle point 2403 near the fourth edge 24, the second outputting needle point 2404 near the fourth edge 24 and so on, until the p-th outputting needle point 2305 near the third edge 23.

The multiple said inputting needle points and outputting needle points near the third edge 23 and the fourth edge 24 for the second stitching thread 4 to draw in sequence are summarized into the following order of arrangement. Namely, the third edge 23 comprises the p-th inputting needle point and the p-th outputting needle point, wherein p may be a positive integer greater than 0, and the fourth edge 24 comprises the q-th inputting needle point and the q-th outputting needle point, wherein q may be a positive integer greater than 0. In this embodiment, when p is equal to q, the p-th outputting needle point near the third edge 23 corresponds to the q-th inputting needle point near the fourth edge 24 and the q-th outputting needle point near the fourth edge 24 corresponds to the (p+1)-th inputting needle point 23051 near the third edge 23 and so on.

In a better embodiment, the p-th inputting needle point and the p-th outputting needle point near the third edge 23 are interlaced and intervallic arranged with each other, wherein p may be a positive integer greater than 0 and the first inputting needle point near the third edge 23 is near outside or inside of the first end of the third edge 23. In another better embodiment, the q-th inputting needle point and the q-th outputting needle point near the fourth edge 24 are interlaced and intervallic arranged with each other, wherein q may be a positive integer greater than 0 and the first inputting needle point near the fourth edge 24 is near outside or inside of the first end of the fourth edge 24.

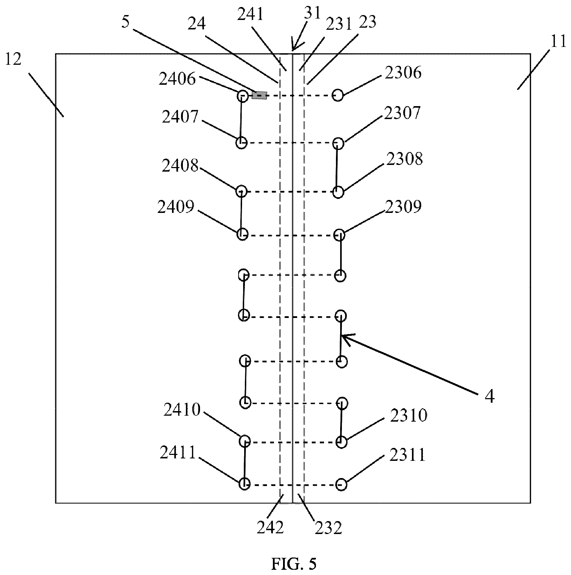

Please refer to FIG. 5. In another embodiment, the structure of the multiple inputting needle points and outputting needle points near the third edge 23 and the fourth edge 24 and the needle drawing order of the second stitching thread 4 could follow the structure of the multiple inputting needle points and outputting needle points near the first edge 21 and the second edge 22 and the needle drawing order of the first stitching thread 3.

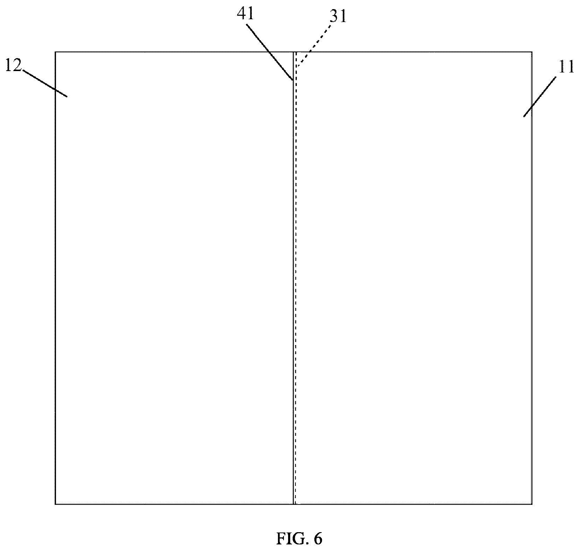

More specifically, the second stitching thread 4 could sequentially draw through the first inputting needle point 2306 near the third edge 23, the first outputting needle point 2406 near the fourth edge 24, the first inputting needle point 2407 near the fourth edge 24, the first outputting needle point 2307 near the third edge 23, the second inputting needle point 2308 near the third edge 23, the second outputting needle point 2408 near the fourth edge 24, the second inputting needle point 2409 near the fourth edge 24, the second outputting needle point 2309 near the third edge 23 and so on. Until the second stitching thread 4 sequentially draws through the p-th inputting needle point 2310 near the third edge 23, the q-th outputting needle point 2410 near the fourth edge 24, the q-th inputting needle point 2411 near the fourth edge 24, the p-th outputting needle point 2311 near the third edge 23, a second seam 41 shown in FIG. 6 is formed at the opening 2 (S104, as shown in FIG. 7).

The multiple said inputting needle points and outputting needle points near the third edge 23 and the fourth edge 24 for the second stitching thread 4 to draw in sequence are summarized into the following order of arrangement. Namely, the third edge 23 comprises the p-th inputting needle point and the p-th outputting needle point, wherein p may be a positive integer greater than 0, and the fourth edge 24 comprises the q-th inputting needle point and the q-th outputting needle point, wherein q may be a positive integer greater than 0, wherein when p is equal to q, the p-th inputting needle point near the third edge 23 corresponds to the q-th outputting needle point near the fourth edge 24 and the q-th inputting needle point near the fourth edge 24 corresponds to the p-th outputting needle point near the third edge 23.

In a better embodiment, the p-th inputting needle point and the p-th outputting needle point near the third edge 23 are interlaced and intervallic arranged with each other, wherein p may be a positive integer greater than 0 and the first inputting needle point near the third edge 23 is near outside or inside of the first end of the third edge 23. Relatively, in this embodiment, the q-th inputting needle point and the q-th outputting needle point near the fourth edge 24 are interlaced and intervallic arranged with each other, wherein q may be a positive integer greater than 0 and the first inputting needle point near the fourth edge 24 is near outside or inside of the first end of the fourth edge 24.

As mentioned above, by using said two structures of the multiple inputting needle points and outputting needle points near the third edge 23 and the fourth edge 24 and the second stitching thread 4, the second stitching thread 4 is extended from the first end 231 of the third edge 23,or the outside or inside of the first end 231, or the first end 241 of the fourth edge 24, or the outside or inside of the first end 241 to the second end 232 of the third edge 23, or the outside or inside of the second end 232, or the second end 242 of the fourth edge 24, or the outside or inside of the second end 242 so the third edge 23 and the fourth edge 24 correspond and are fastened to each other to form the second seam 41 (S104, as shown in FIG. 7).

In a better embodiment, the vertical distance between the second stitching thread 4 and the third edge 23 or the fourth edge 24 may be between 1 mm and 5 mm, but not limited thereto. The vertical distance between the second stitching thread 4 and the third edge 23 or the fourth edge 24 could be adjusted according to actual requirements.

In a better embodiment, the distance between the p-th inputting needle point near the third edge 23 and the p-th outputting needle point near the third edge 23 may be between 1 mm and 5 mm, but not limited thereto. The distance between the p-th inputting needle point near the third edge 23 and the p-th outputting needle point near the third edge 23 could be adjusted according to actual requirements.

In a better embodiment, the distance between the q-th inputting needle point near the fourth edge 24 and the q-th outputting needle point near the fourth edge 24 may be between 1 mm and 5 mm, but not limited thereto. The distance between the q-th inputting needle point near the fourth edge 24 and the q-th outputting needle point near the fourth edge 24 could be adjusted according to actual requirements.

According to the each embodiment mentioned above, the second stitching thread further forms a bar-tack structure 5 between the first outputting needle point near the third edge and the first inputting needle point near the fourth edge or between the first inputting needle point near the third edge and the first outputting needle point near the fourth edge.

According to an actual test, the stuffed object made by using the outer layer structure of the stuffed object and the sewing method thereof according to the present invention is clamped on both sides of the first seam and the second seam respectively by two needle nose pliers of a tension puller, which is about 2 cm away from the first seam and the second seam. One side of the stuffed object hangs on the tension puller, and another side of the stuffed object is pulled in parallel. The pulling force reaches 36.3 kg (about 80 pounds) and stays for 10 seconds. The test result shows that both of the first seam and the second seam are not broken or damaged. By comparison, the seam of the stuffed object made by using the structures and the sewing methods thereof in the prior art is torn when the pulling force is less than 30kg (about 62 pounds). In summary, the stuffed object made by using the outer layer structure of the stuffed object and the sewing method thereof according to the present invention are able to increase the strength at the stitching positions of the stuffed object to enhance the durability of the stuffed object. In addition to being entertaining for humans, the stuffed object applying the present invention are more suitable for pets, such as dogs or cats, based on the great tolerance of biting and pulling.

The foregoing descriptions of the detailed embodiments are only illustrated to disclose the features and functions of the present invention and not restrictive of the scope of the present invention. It should be understood that various modifications and variations fall within the scope of the appended claims.

## Claims

1. An outer layer structure of a stuffed object, comprising:
at least one first fabric component(11) and at least one second fabric component(12) fastened to each other substantially to form a container(1) which has an accommodation space(10) inside the container(1) and a predetermined shape is defined by an outer surface of the container; the container(1) further comprises an opening(2) connected with the accommodation space(10), wherein the opening(2) comprises:
a first edge(21) located on a side of the first fabric component(11) and having a first end(211) and a second end(212); and
a second edge(22) located on a side of the second fabric component(12) and having a first end(221) and a second end(222), and the second edge(22) corresponds to the first edge(21) to form the opening, wherein the opening(2) has a first end(201) and a second end(202); and wherein
the first end(211) of the first edge(21) corresponds to the first end(221) of the second edge(22) and the first end(201) of the opening(2) is formed by fastening the first end(211) of the first edge(21) to the first end(221) of the second edge(22), and the second end(212) of the first edge(21) corresponds to the second end(222) of the second edge(22) and the second end(202) of the opening(2) is formed by fastening the second end(212) of the first edge(21) to the second end(222) of the second edge(22); the outer layer structure of a stuffed object further comprising:
a first stitching thread(3) extended from the first end(201) of the opening(2) to the second end(202) of the opening(2) so the first edge(21) and the second edge(22) corresponds to each other and the opening(2) is stitched and fastened by the first stitching thread(3), and thereby a first seam(31) is formed at the opening(2) near the first edge(21) and the second edge(22), wherein the first seam(31) comprises:
a third edge(23) located on the first fabric component(11) near the first edge(21) and having a first end(231) and a second end(232); and
a fourth edge(24) located on the second fabric component(12) near the second edge(22) and having a first end(241) and a second end(242), and the fourth edge(24) corresponds to the third edge(23), wherein
the first end(231) of the third edge(23) corresponds to the first end(241) of the fourth edge(24), and the first end(231) of the third edge(23) and the first end(241) of the fourth edge(24) are fastened to each other, and the second end(232) of the third edge(23) corresponds to the second end(242) of the fourth edge(24), and the second end(232) of the third edge(23) and the second end(242) of the fourth edge(24) are fastened to each other; and
**characterized by** further comprising:
a second stitching thread(4) extended from the first end(231) of the third edge(23) or the first end(241) of the fourth edge(24) to the second end(232) of the third edge(23) or the second end(242) of the fourth edge(24) so the third edge(23) corresponds to the fourth edge(24), and the third edge(23) and the fourth edge(24) are stitched and fastened to each other to form a second seam(41) near the third edge(23) and the fourth edge(24), wherein the opening is stitched and sealed by the first stitching thread(3) and the second stitching thread(4) in sequence.

2. The outer layer structure of a stuffed object of claim 1, wherein the first fabric component(11) comprises an n-th inputting needle point(2101, 2103, 2105) and an n-th outputting needle point(2102, 2104, 2106) near the first edge (21), wherein n is a positive integer greater than 0, and the second fabric component(12) comprises an m-th inputting needle point(2202, 2204, 2206) and an m-th outputting needle point(2201, 2203, 2205) near the second edge (22), wherein m is a positive integer greater than 0, wherein when n is equal to m, the n-th inputting needle point(2101, 2103, 2105) near the first edge(21) corresponds to the m-th outputting needle point(2201, 2203, 2205) near the second edge(22) and the m-th inputting needle point(2202, 2204, 2206) near the second edge(22) corresponds to the n-th outputting needle point(2102, 2104, 2106) near the first edge(21).

3. The outer layer structure of a stuffed object of claim 2, wherein the n-th inputting needle point(2101, 2103, 2105) and the n-th outputting needle point(2102, 2104, 2106) near the first edge(21) are interlaced and intervallic arranged with each other, wherein n is a positive integer greater than 0 and a first inputting needle point(2101) near the first edge(21) is near the first end(211) of the first edge(21).

4. The outer layer structure of a stuffed object of claim 3, wherein the m-th inputting needle point(2202, 2204, 2206) and the m-th outputting needle point(2201, 2203, 2205) near the second edge(22) are interlaced and intervallic arranged with each other, wherein m is a positive integer greater than 0 and a first outputting needle point(2201) near the second edge(22) is near the first end(221) of the second edge(22).

5. The outer layer structure of a stuffed object of claim 4, wherein the first stitching thread (3) sequentially draws through the first inputting needle point(2101) near the first edge(21), the first outputting needle point(2201) near the second edge(22), the first inputting needle point(2202) near the second edge(22), the first outputting needle point(2102) near the first edge(21), the second inputting needle point(2103) near the first edge(21), the second outputting needle point(2203) near the second edge(22), the second inputting needle point(2204) near the second edge(22), the second outputting needle point(21048) near the first edge(21),..., the n-th inputting needle point(2105) near the first edge(21), the m-th outputting needle point(2205) near the second edge(22), the m-th inputting needle point(2206) near the second edge(22), the n-th outputting needle point(2106) near the first edge(21), wherein n is a positive integer greater than 2 and m is a positive integer greater than 2.

6. The outer layer structure of a stuffed object of claim 5, wherein the first fabric component(11) comprises a p-th inputting needle point(2301, 2303, 23051) and a p-th outputting needle point(2302, 2304, 2305)near the third edge(23), wherein p is a positive integer greater than 0, and the second fabric component(12) comprises a q-th inputting needle point(2401, 2403, 2405) and a q-th outputting needle point(2402, 2404, 24051)near the fourth edge(24), wherein q is a positive integer greater than 0, wherein when p is equal to q, the p-th outputting needle point(2302, 2304, 2305) near the third edge(23) corresponds to the q-th inputting needle point(2401, 2403, 2405) near the fourth edge(24) and the q-th outputting needle point(2402, 2404, 24051) near the fourth edge(24) corresponds to the (p+1)-th inputting needle point(2303, 23051) near the third edge(23).

7. The outer layer structure of a stuffed object of claim 6, wherein the p-th inputting needle point(2301, 2303, 23051) and the p-th outputting needle point(2302, 2304, 2305) near the third edge(23) are interlaced and intervallic arranged with each other, wherein p is a positive integer greater than 0 and a first inputting needle point(2301) near the third edge(23) is near the first end(231) of the third edge(23).

8. The outer layer structure of a stuffed object of claim 7, wherein the q-th inputting needle point(2401, 2403, 2405) and the q-th outputting needle point(2402, 2404, 2406) near the fourth edge(24) are interlaced and intervallic arranged with each other, wherein q is a positive integer greater than 0 and a first inputting needle point(2401) near the fourth edge(24) is near the first end(241) of the fourth edge(24).

9. The outer layer structure of a stuffed object of claim 8, wherein the second stitching thread(4) sequentially draws through the first inputting needle point(2306) near the third edge(23), the first outputting needle point(2302) near the third edge(23), the first inputting needle point(2401) near the fourth edge(24), the first outputting needle point(2402) near the fourth edge(24), the second inputting needle point(2303) near the third edge(23), the second outputting needle point(2304) near the third edge(23), the second inputting needle point(2403) near the fourth edge(24), the second outputting needle point(2404) near the fourth edge(24),..., the p-th outputting needle point(2305) near the third edge(23), the q-th inputting needle point near the fourth edge(24), the q-th outputting needle point near the fourth edge(24), the (p+1)-th inputting needle point(23051) near the third edge(23), wherein p is a positive integer greater than 2 and q is a positive integer greater than 2.

10. The outer layer structure of a stuffed object of claim 9, wherein after the second stitching thread(4) sequentially draws through the p-th outputting needle point(2302, 2304, 2306) near the third edge(23), the second stitching thread(4) draws through the q-th inputting needle point(2401, 2403, 2405) near the fourth edge(24), and then draws through the q-th outputting needle point(2402, 2404, 2406) near the fourth edge(24), wherein p is a positive integer greater than 2 and q is a positive integer greater than 2.

11. The outer layer structure of a stuffed object of claim 5, wherein the third edge(23) comprises a p-th inputting needle point(2306, 2308, 2310) and a p-th outputting needle point(2307, 2309, 2311), wherein p is a positive integer greater than 0, and the fourth edge(24) comprises a q-th inputting needle point(2407, 2409, 2411) and a q-th outputting needle point(2406, 2408, 2410), wherein q is a positive integer greater than 0, wherein when p is equal to q, the p-th inputting needle point(2306, 2308, 2310) near the third edge(23) corresponds to the q-th outputting needle point(2406, 2408, 2410) near the fourth edge(24) and the q-th inputting needle point(2407, 2409, 2411) near the fourth edge(24) corresponds to the p-th outputting needle point(2307, 2309, 2311) near the third edge(23).

12. The outer layer structure of a stuffed object of claim 11, wherein the p-th inputting needle point(2306, 2308, 2310) and the p-th outputting needle point(2307, 2309, 2311) near the third edge(23) are interlaced and intervallic arranged with each other, wherein p is a positive integer greater than 0 and a first inputting needle point(2306) near the third edge(23) is near the first end(231) of the third edge(23).

13. The outer layer structure of a stuffed object of claim 12, wherein the q-th inputting needle point(2407, 2409, 2411) and the q-th outputting needle point(2406, 2408, 2410) near the fourth edge(24) are interlaced and intervallic arranged with each other, wherein q is a positive integer greater than 0 and a first outputting needle point(2406) near the fourth edge(24) is near the first end(241) of the fourth edge(24).

14. The outer layer structure of a stuffed object of claim 13, wherein the second stitching thread(4) sequentially draws through the first inputting needle point(2306) near the third edge(23), the first outputting needle point(2406) near the fourth edge(24), the first inputting needle point(2407) near the fourth edge(24), the first outputting needle point(2307) near the third edge(23), the second inputting needle point(2308) near the third edge(23), the second outputting needle point(2408) near the fourth edge(24), the second inputting needle point(2409) near the fourth edge(24), the second outputting needle point(2309) near the third edge(23),..., the p-th inputting needle point(2310) near the third edge(23), the q-th outputting needle point(2410) near the fourth edge(24), the q-th inputting needle point(2411) near the fourth edge(24), the p-th outputting needle point(2311) near the third edge(23), wherein p is a positive integer greater than 2 and q is a positive integer greater than 2.

15. A sewing method of an outer layer structure of a stuffed object, comprising:
sewing partially along a periphery of at least one first fabric component(11) and a periphery of at least one second fabric component(12) to form a container(1) which has an accommodation space(10) inside the container(1);
forming an opening(2) at an unsewn portion between the periphery of the at least one first fabric component(11) and the periphery of the at least one second fabric component(12), wherein the opening(2) is connected with the accommodation space(10) and the opening(2) comprises a first edge(21) and a second edge(22), wherein the first edge(21) is located on a side of the first fabric component(11) and has a first end(211) and a second end(212); and the second edge(22) is located on a side of the second fabric component(12) and has a first end(221) and a second end(222), and the second edge(22) corresponds to the first edge(21) to form the opening(2), wherein the opening(2) has a first end(201) and a second end(202); wherein the sewing method of an outer layer structure of a stuffed object further comprises the following steps:
extending a first stitching thread(3) from the first end(201) of the opening(2) to the second end(202) of the opening(2) so the first edge(21) and the second edge(22) corresponds to each other and the opening(2) is stitched and fastened to form a first seam(31) at the opening(2) near the first edge(21) and the second edge(22), wherein the first seam(31) comprises a third edge(23) and a fourth edge(24), wherein the third edge(23) is located on the first fabric component(11) near the first edge(21) and has a first end and(231) a second end(232), wherein the third edge(23) is substantially parallel to the first edge(21); and the fourth edge(24) is located on the second fabric component(12) near the second edge(22) and has a first end(241) and a second end(242), wherein the fourth edge(24) is substantially parallel to the second edge(22); and the method being **characterized by** in sequence extending a second stitching thread(4) from the first end(231) of the third edge(23) or the first end(241) of the fourth edge(24) to the second end(232) of the third edge(23) or the second end(242) of the fourth edge(24) so the third edge(23) corresponds to the fourth edge(24), and the third edge(23) and the fourth edge(24) are stitched and fastened to each other to form a second seam(41) near the third edge(23) and the fourth edge(24).

## Patentansprüche

1. Außenlagenstruktur eines ausgestopften Objekts, umfassend:
wenigstens eine erste Stoffkomponente (11) und wenigstens eine zweite Stoffkomponente (12), die aneinander befestigt sind, um im Wesentlichen einen Behälter (1) zu bilden, der einen Aufnahmeraum (10) im Inneren des Behälters (1) aufweist, wobei durch eine Außenfläche des Behälters eine vorgegebene Form definiert wird; wobei der Behälter (1) ferner eine Öffnung (2) umfasst, die mit dem Aufnahmeraum (10) verbunden ist, wobei die Öffnung (2) umfasst:
eine erste Kante (21) auf einer Seite der ersten Stoffkomponente (11) mit einem ersten Ende (211) und einem zweiten Ende (212); und
eine zweite Kante (22) auf einer Seite der zweiten Stoffkomponente (12) mit einem ersten Ende (221) und einem zweiten Ende (222), wobei die zweite Kante (22) der ersten Kante (21) entspricht, um die Öffnung zu bilden, wobei die Öffnung (2) ein erstes Ende (201) und ein zweites Ende (202) aufweist; und wobei
das erste Ende (211) der ersten Kante (21) dem ersten Ende (221) der zweiten Kante (22) entspricht und das erste Ende (201) der Öffnung (2) durch Befestigen des ersten Endes (211) der ersten Kante (21) an dem ersten Ende (221) der zweiten Kante (22) gebildet ist, und das zweite Ende (212) der ersten Kante (21) dem zweiten Ende (222) der zweiten Kante (22) entspricht und das zweite Ende (202) der Öffnung (2) durch Befestigen des zweiten Endes (212) der ersten Kante (21) an dem zweiten Ende (222) der zweiten Kante (22) gebildet ist; wobei die Außenlagenstruktur eines ausgestopften Objekts ferner umfasst:
einen ersten Nähfaden (3), der sich vom ersten Ende (201) der Öffnung (2) zum zweiten Ende (202) der Öffnung (2) erstreckt, so dass die erste Kante (21) und die zweite Kante (22) einander entsprechen und die Öffnung (2) durch den ersten Nähfaden (3) vernäht und befestigt ist, wodurch eine erste Naht (31) an der Öffnung (2) nahe der ersten Kante (21) und der zweiten Kante (22) gebildet ist, wobei die erste Naht (31) umfasst:
eine dritte Kante (23) an der ersten Stoffkomponente (11) nahe der ersten Kante (21) mit einem ersten Ende (231) und einem zweiten Ende (232); und
eine vierte Kante (24) an der zweiten Stoffkomponente (12) nahe der zweiten Kante (22) mit einem ersten Ende (241) und einem zweiten Ende (242), wobei die vierte Kante (24) der dritten Kante (23) entspricht, wobei
das erste Ende (231) der dritten Kante (23) dem ersten Ende (241) der vierten Kante (24) entspricht und das erste Ende (231) der dritten Kante (23) und das erste Ende (241) der vierten Kante (24) aneinander befestigt sind und das zweite Ende (232) der dritten Kante (23) dem zweiten Ende (242) der vierten Kante (24) entspricht, und das zweite Ende (232) der dritten Kante (23) und das zweite Ende (242) der vierten Kante (24) aneinander befestigt sind; und ferner **gekennzeichnet durch**:
einen zweiten Nähfaden (4), der sich vom ersten Ende (231) der dritten Kante (23) oder vom ersten Ende (241) der vierten Kante (24) zum zweiten Ende (232) der dritten Kante (23) oder zum zweiten Ende (242) der vierten Kante (24) erstreckt, so dass die dritte Kante (23) der vierten Kante (24) entspricht, wobei die dritte Kante (23) und die vierte Kante (24) vernäht und aneinander befestigt sind, um eine zweite Naht (41) nahe der dritten Kante (23) und der vierten Kante (24) zu bilden, wobei die Öffnung durch den ersten Nähfaden (3) und den zweiten Nähfaden (4) in Folge vernäht und verschlossen ist.

2. Außenlagenstruktur eines ausgestopften Objekts nach Anspruch 1, wobei die erste Stoffkomponente (11) einen n-ten Eingangsnadelpunkt (2101, 2103, 2105) und einen n-ten Ausgangsnadelpunkt (2102, 2104, 2106) nahe der ersten Kante (21) umfasst, wobei n eine positive Ganzzahl größer als 0 ist, und die zweite Stoffkomponente (12) einen m-ten Eingangsnadelpunkt (2202, 2204, 2206) und einen m-ten Ausgangsnadelpunkt (2201, 2203, 2205) nahe der zweiten Kante (22) umfasst, wobei m eine positive Ganzzahl größer als 0 ist, wobei, wenn n gleich m ist, der n-te Eingangsnadelpunkt (2101, 2103, 2105) nahe der ersten Kante (21) dem m-ten Ausgangsnadelpunkt (2201, 2203, 2205) nahe der zweiten Kante (22) entspricht und der m-te Eingangsnadelpunkt (2202, 2204, 2206) nahe der zweiten Kante (22) dem n-ten Ausgangsnadelpunkt (2102, 2104, 2106) nahe der ersten Kante (21) entspricht.

3. Außenlagenstruktur eines ausgestopften Objekts nach Anspruch 2, wobei der n-te Eingangsnadelpunkt (2101, 2103, 2105) und der n-te Ausgangsnadelpunkt (2102, 2104, 2106) nahe der ersten Kante (21) verschachtelt und in Intervallen zueinander angeordnet sind, wobei n eine positive Ganzzahl größer als 0 ist und ein erster Eingangsnadelpunkt (2101) nahe der ersten Kante (21) nah am ersten Ende (211) der ersten Kante (21) liegt.

4. Außenlagenstruktur eines ausgestopften Objekts nach Anspruch 3, wobei der m-te Eingangsnadelpunkt (2202, 2204, 2206) und der m-te Ausgangsnadelpunkt (2201, 2203, 2205) nahe der zweiten Kante (22) verschachtelt und in Intervallen zueinander angeordnet sind, wobei m eine positive Ganzzahl größer als 0 ist, und ein erster Ausgangsnadelpunkt (2201) nahe der zweiten Kante (22) nah am ersten Ende (221) der zweiten Kante (22) liegt.

5. Außenlagenstruktur eines ausgestopften Objekts nach Anspruch 4, wobei der erste Nähfaden (3) nacheinander durch den ersten Eingangsnadelpunkt (2101) nahe der ersten Kante (21), den ersten Ausgangsnadelpunkt (2201) nahe der zweiten Kante (22), den ersten Eingangsnadelpunkt (2202) nahe der zweiten Kante (22), den ersten Ausgangsnadelpunkt (2102) nahe der ersten Kante (21), den zweiten Eingangsnadelpunkt (2103) nahe der ersten Kante (21), den zweiten Ausgangsnadelpunkt (2203) nahe der zweiten Kante (22), den zweiten Eingangsnadelpunkt (2204) nahe der zweiten Kante (22), den zweiten Ausgangsnadelpunkt (21048) nahe der ersten Kante (21),..., den n-ten Eingangsnadelpunkt (2105) nahe der ersten Kante (21), den m-ten Ausgangsnadelpunkt (2205) nahe der zweiten Kante (22), den m-ten Eingangsnadelpunkt (2206) nahe der zweiten Kante (22) und den n-ten Ausgangsnadelpunkt (2106) nahe der ersten Kante (21) geführt ist, wobei n eine positive Ganzzahl größer als 2 und m eine positive Ganzzahl größer als 2 ist.

6. Außenlagenstruktur eines ausgestopften Objekts nach Anspruch 5, wobei die erste Stoffkomponente (11) einen p-ten Eingangsnadelpunkt (2301, 2303, 23051) und einen p-ten Ausgangsnadelpunkt (2302, 2304, 2305) nahe der dritten Kante (23) umfasst, wobei p eine positive Ganzzahl größer als 0 ist, und die zweite Stoffkomponente (12) einen q-ten Eingangsnadelpunkt (2401, 2403, 2405) und einen q-ten Ausgangsnadelpunkt (2402, 2404, 24051) nahe der vierten Kante (24) umfasst, wobei q eine positive Ganzzahl größer als 0 ist, wobei, wenn p gleich q ist, der p-te Ausgangsnadelpunkt (2302, 2304, 2305) nahe der dritten Kante (23) dem q-ten Eingangsnadelpunkt (2401, 2403, 2405) nahe der vierten Kante (24) entspricht und der q-te Ausgangsnadelpunkt (2402, 2404, 24051) nahe der vierten Kante (24) dem (p+1)-ten Eingangsnadelpunkt (2303, 23051) nahe der dritten Kante (23) entspricht.

7. Außenlagenstruktur eines ausgestopften Objekts nach Anspruch 6, wobei der p-te Eingangsnadelpunkt (2301, 2303, 23051) und der p-te Ausgangsnadelpunkt (2302, 2304, 2305) nahe der dritten Kante (23) verschachtelt und in Intervallen zueinander angeordnet sind, wobei p eine positive Ganzzahl größer als 0 ist, und ein erster Eingangsnadelpunkt (2301) nahe der dritten Kante (23) nah am ersten Ende (231) der dritten Kante (23) liegt.

8. Außenlagenstruktur eines ausgestopften Objekts nach Anspruch 7, wobei der q-te Eingangsnadelpunkt (2401, 2403, 2405) und der q-te Ausgangsnadelpunkt (2402, 2404, 2406) nahe der vierten Kante (24) verschachtelt und in Intervallen zueinander angeordnet sind, wobei q eine positive Ganzzahl größer als 0 ist, und ein erster Eingangsnadelpunkt (2401) nahe der vierten Kante (24) nah am ersten Ende (241) der vierten Kante (24) liegt.

9. Außenlagenstruktur eines ausgestopften Objekts nach Anspruch 8, wobei der zweiten Nähfaden (4) nacheinander durch den ersten Eingangsnadelpunkt (2306) nahe der dritten Kante (23), den ersten Ausgangsnadelpunkt (2302) nahe der dritten Kante (23), den ersten Eingangsnadelpunkt (2401) nahe der vierten Kante (24), den ersten Ausgangsnadelpunkt (2402) nahe der vierten Kante (24), den zweiten Eingangsnadelpunkt (2303) nahe der dritten Kante (23), den zweiten Ausgangsnadelpunkt (2304) nahe der dritten Kante (23), den zweiten Eingangsnadelpunkt (2403) nahe der vierten Kante (24), den zweiten Ausgangsnadelpunkt (2404) nahe der vierten Kante (24),..., den p-ten Ausgangsnadelpunkt (2305) nahe der dritten Kante (23), den q-ten Eingangsnadelpunkt (2405) nahe der vierten Kante (24), den q-ten Ausgangsnadelpunkt (2406) nahe der vierten Kante (24) und den (p+1)-ten Eingangsnadelpunkt (23051) nahe der dritten Kante (23) geführt ist, wobei p eine positive Ganzzahl größer als 2 und q eine positive Ganzzahl größer als 2 ist.

10. Außenlagenstruktur eines ausgestopften Objekts nach Anspruch 9, wobei nach dem Führen des zweiten Nähfadens (4) nacheinander durch den p-ten Ausgangsnadelpunkt (2302, 2304, 2306) nahe der dritten Kante (23) der zweite Nähfaden (4) durch den q-ten Eingangsnadelpunkt (2401, 2403, 2405) nahe der vierten Kante (24) geführt ist und dann durch den q-ten Ausgangsnadelpunkt (2402, 2404, 2406) nahe der vierten Kante (24) geführt ist, wobei p eine positive Ganzzahl größer als 2 und q eine positive Ganzzahl größer als 2 ist.

11. Außenlagenstruktur eines ausgestopften Objekts nach Anspruch 5, wobei die dritte Kante (23) einen p-ten Eingangsnadelpunkt (2306, 2308, 2310) und einen p-ten Ausgangsnadelpunkt (2307, 2309, 2311) umfasst, wobei p eine positive Ganzzahl größer als 0 ist, und die vierte Kante (24) einen q-ten Eingangsnadelpunkt (2407, 2409, 2411) und einen q-ten Ausgangsnadelpunkt (2406, 2408, 2410) umfasst, wobei q eine positive Ganzzahl größer als 0 ist, wobei, wenn p gleich q ist, der p-te Eingangsnadelpunkt (2306, 2308, 2310) nahe der dritten Kante (23) dem q-ten Ausgangsnadelpunkt (2406, 2408, 2410) nahe der vierten Kante (24) entspricht und der q-te Eingangsnadelpunkt (2407, 2409, 2411) nahe der vierten Kante (24) dem p-ten Ausgangsnadelpunkt (2307, 2309, 2311) nahe der dritten Kante (23) entspricht.

12. Außenlagenstruktur eines ausgestopften Objekts nach Anspruch 11, wobei der p-te Eingangsnadelpunkt (2306, 2308, 2310) und der p-te Ausgangsnadelpunkt (2307, 2309, 2311) nahe der dritten Kante (23) verschachtelt und in Intervallen zueinander angeordnet sind, wobei p eine positive Ganzzahl größer als 0 ist, und ein erster Eingangsnadelpunkt (2306) nahe der dritten Kante (23) nah am ersten Ende (231) der dritten Kante (23) liegt.

13. Außenlagenstruktur eines ausgestopften Objekts nach Anspruch 12, wobei der q-te Eingangsnadelpunkt (2407, 2409, 2411) und der q-te Ausgangsnadelpunkt (2406, 2408, 2410) nahe der vierten Kante (24) verschachtelt und in Intervallen zueinander angeordnet sind, wobei q eine positive Ganzzahl größer als 0 ist, und ein erster Ausgangsnadelpunkt (2406) nahe der vierten Kante (24) nah am ersten Ende (241) der vierten Kante (24) liegt.

14. Außenlagenstruktur eines ausgestopften Objekts nach Anspruch 13, wobei der zweite Nähfaden (4) nacheinander durch den ersten Eingangsnadelpunkt (2306) nahe der dritten Kante (23), den ersten Ausgangsnadelpunkt (2406) nahe der vierten Kante (24), den ersten Eingangsnadelpunkt (2407) nahe der vierten Kante (24), den ersten Ausgangsnadelpunkt (2307) nahe der dritten Kante (23), den zweiten Eingangsnadelpunkt (2308) nahe der dritten Kante (23), den zweiten Ausgangsnadelpunkt (2408) nahe der vierten Kante (24), den zweiten Eingangsnadelpunkt (2409) nahe der vierten Kante (24), den zweiten Ausgangsnadelpunkt (2309) nahe der dritten Kante (23),..., den p-ten Eingangsnadelpunkt (2310) nahe der dritten Kante (23), den q-ten Ausgangsnadelpunkt (2410) nahe der vierten Kante (24), den q-ten Eingangsnadelpunkt (2411) nahe der vierten Kante (24) und den p-ten Ausgangsnadelpunkt (2311) nahe der dritten Kante (23) geführ ist, wobei p eine positive Ganzzahl größer als 2 und q eine positive Ganzzahl größer als 2 ist.

15. Verfahren zum Nähen einer Außenlagenstruktur eines ausgestopften Objekts, umfassend:
teilweises Nähen entlang einem Umfang von wenigstens einer ersten Stoffkomponente (11) und einem Umfang von wenigstens einer zweiten Stoffkomponente (12), um einen Behälter (1) zu bilden, der einen Aufnahmeraum (10) im Inneren des Behälters (1) aufweist;
Bilden einer Öffnung (2) an
einem nicht genähten Abschnitt zwischen dem Umfang der wenigstens einen ersten Stoffkomponente (11) und dem Umfang der wenigstens einen zweiten Stoffkomponente (12), wobei die Öffnung (2) mit dem Aufnahmeraum (10) verbunden wird und die Öffnung (2) eine erste Kante (21) und einn zweite Kante (22) umfasst, wobei die erste Kante (21) auf einer Seite der ersten Stoffkomponente (11) liegt und ein erstes Ende (211) und ein zweites Ende (212) aufweist; und die zweit Kante (22) auf einer Seite der zweiten Stoffkomponente (12) liegt und ein erstes Ende (221) und ein zweites Ende (222) aufweist, wobei die zweiten Kante (22) der ersten Kante (21) entspricht, um die Öffnung (2) zu bilden, wobei die Öffnung (2) ein erstes Ende (201) und ein zweites Ende (202) aufweist; wobei
das Verfahren zum Nähen einer Außenlagenstruktur eines ausgestopften Objekts folgende Schritte umfasst:
Führen eines ersten Nähfaden (3) von dem ersten Ende (201) der Öffnung (2) zum zweiten Ende (202) der Öffnung (2), so dass die erste Kante (21) und die zweite Kante (22) einander entsprechen und die Öffnung (2) vernäht und befestigt wird, um eine ersten Naht (31) an der Öffnung (2) nahe der ersten Kante (21) und der zweiten Kante (22) zu bilden,
wobei die erste Naht (31) eine dritte Kante (23) und eine vierte Kante (24) umfasst, wobei die dritte Kante (23) an der ersten Stoffkomponente (11) nahe der ersten Kante (21) liegt und eine erstes Ende (231) und ein zweites Ende (232) aufweist, wobei die dritte Kante (23) im Wesentlichen parallel zur ersten Kante (21) ist; und die vierten Kante (24) an der zweiten Stoffkomponente (12) nahe der zweiten Kante (22) liegt und ein erstes Ende (241) und ein zweites Ende (242) aufweist, wobei die vierte Kante (24) im Wesentlichen parallel zur zweiten Kante (22) ist; wobei das Verfahren **gekennzeichnet ist durch** nacheinander
Führen eines zweiten Nähfadens (4) von dem ersten Ende (231) der dritten Kante (23) oder dem ersten Ende (241) der vierten Kante (24) zum zweiten Ende (232) der dritten Kante (23) oder zum zweiten Ende (242) der vierten Kante (24), so dass die dritte Kante (23) der vierten Kante (24) entspricht, wobei die dritte Kante (23) und die vierte Kante (24) vernäht und aneinander befestigt werden, um eine zweite Naht (41) nahe der dritten Kante (23) und der vierten Kante (24) zu bilden.

## Revendications

1. Structure de couche extérieure d'un objet fourré, comprenant :
au moins un premier composant en tissu (11) et au moins un second composant en tissu (12) fixés l'un à l'autre sensiblement pour former un contenant (1) qui possède un espace d'accueil (10) à l'intérieur du contenant (1) et une forme prédéterminée est définie par une surface extérieure du contenant ; le contenant (1) comprend en outre une ouverture (2) reliée à l'espace d'accueil (10), l'ouverture (2) comprenant :
un premier bord (21) situé sur un côté du premier composant en tissu (11) et ayant une première extrémité (211) et une seconde extrémité (212) ; et
un second bord (22) situé sur un côté du second composant en tissu (12) et ayant une première extrémité (221) et une seconde extrémité (222), et le second bord (22) correspondant au premier bord (21) pour former l'ouverture, l'ouverture (2) ayant une première extrémité (201) et une seconde extrémité (202) ; et dans lequel
la première extrémité (211) du premier bord (21) correspond à la première extrémité (221) du second bord (22) et la première extrémité (201) de l'ouverture (2) se forme en fixant la première extrémité (211) du premier bord (21) à la première extrémité (221) du second bord (22), et la seconde extrémité (212) du premier bord (21) correspond à la seconde extrémité (222) du second bord (22) et la seconde extrémité (202) de l'ouverture (2) se forme en fixant la seconde extrémité (212) du premier bord (21) à la seconde extrémité (222) du second bord (22) ; la structure de la couche extérieure d'un objet fourré comprenant en outre :
un premier fil de couture (3) s'étendant de la première extrémité (201) de l'ouverture (2) à la seconde extrémité (202) de l'ouverture (2), de sorte que le premier bord (21) et le second bord (22) correspondent l'un à l'autre et l'ouverture (2) est cousue et fixée par le premier fil de couture (3), formant ainsi une première couture (31) à l'ouverture (2) près du premier bord (21) et du second bord (22), la première couture (31) comprenant :
un troisième bord (23) situé sur le premier composant en tissu (11) près du premier bord (21) et ayant une première extrémité (231) et une seconde extrémité (232) ; et
un quatrième bord (24) situé sur le second composant en tissu (12) près du second bord (22) et ayant une première extrémité (241) et une seconde extrémité (242), le quatrième bord (24) correspondant au troisième bord (23), dans lequel
la première extrémité (231) du troisième bord (23) correspond à la première extrémité (241) du quatrième bord (24), et la première extrémité (231) du troisième bord (23) et la première extrémité (241) du quatrième bord (24) sont fixées les unes aux autres, et la seconde extrémité (232) du troisième bord (23) correspond à la seconde extrémité (242) du quatrième bord (24), et la seconde extrémité (232) du troisième bord (23) et la seconde extrémité (242) du quatrième bord (24) sont fixées les unes aux autres ; et **caractérisé en ce que** :
un second fil de couture (4) s'étend de la première extrémité (231) du troisième bord (23) ou de la première extrémité (241) du quatrième bord (24) jusqu'à la seconde extrémité (232) du troisième bord (23) ou de la seconde extrémité (242) du quatrième bord (24), de sorte que le troisième bord (23) correspond au quatrième bord (24), et le troisième bord (23) et le quatrième bord (24) sont cousus et fixés l'un à l'autre pour former une seconde couture (41) près du troisième bord (23) et du quatrième bord (24), l'ouverture étant cousue et scellée par le premier fil de couture (3) et le second fil de couture (4) dans l'ordre.

2. La structure de couche extérieure d'un objet fourré selon la revendication 1, dans laquelle le premier composant en tissu (11) comprend un n-ième point d'aiguille d'entrée (2101, 2103, 2105) et un n-ième point d'aiguille de sortie (2102, 2104, 2106) près du premier bord (21), n étant un entier positif supérieur à 0, et le second composant en tissu (12) comprend un m-ième point d'aiguille d'entrée (2202, 2204, 2206) et un m-ième point d'aiguille de sortie (2201, 2203, 2205) près du second bord (22), m étant un entier positif supérieur à 0, où lorsque n est égal à m, le n-ième point d'aiguille d'entrée (2101, 2103, 2105) près du premier bord (21) correspond au m-ième point d'aiguille de sortie (2201, 2203, 2205) près du second bord (22) et le m-ième point aiguille d'entrée (2202, 2204, 2206) près du second bord (22) correspond au n-ième point d'aiguille de sortie (2102, 2104, 2106) près du premier bord (21).

3. La structure de la couche extérieure d'un objet fourré selon la revendication 2, dans lequel le n-ième point d'aiguille d'entrée (2101, 2103, 2105) et le n-ième point d'aiguille d'entrée (2102, 2104, 2106) près du premier bord (21) sont entrelacés et disposés par intervalles l'un avec l'autre, n étant un entier positif supérieur à 0 et un point d'aiguille d'entrée de premier (2101) près du premier bord (21) étant proche de la première extrémité (211) du premier bord (21).

4. La structure de la couche extérieure d'un objet fourré selon la revendication 3, dans laquelle le m-ième point d'aiguille d'entrée (2202, 2204, 2206) et le m-ième point d'aiguille de sortie (2201, 2203, 2205) près du second bord (22) sont entrelacés et disposés par intervalles l'un avec l'autre, m étant un entier positif supérieur à 0 et un point d'aiguille de la première sortie (2201) près du second bord (22) étant proche de la première extrémité (221) du second bord (22).

5. La structure de couche extérieure d'un objet fourré selon la revendication 4, dans laquelle le premier fil de couture (3) passe séquentiellement à travers le premier point d'aiguille d'entrée (2101) près du premier bord (21), le premier point d'aiguille de sortie (2201) près du second bord (22), le premier point d'aiguille d'entrée (2202) près du second bord (22), le premier point d'aiguille de sortie (2102) près du premier bord (21), le second point d'aiguille d'entrée (2103) près du premier bord (21), le second point d'aiguille de sortie (2203) près du second bord (22), le second point d'aiguille d'entrée (2204) près du second bord (22), le second point d'aiguille de sortie (2104) près du premier bord (21),..., le n-ième point d'aiguille de sortie (2105) près du premier bord (21), le m-ième point d'aiguille de sortie (2205) près du second bord (22), le m-ième point d'aiguille d'entrée (2206) près du second bord (22), le n-ième point d'aiguille de sortie (2106) près du premier bord (21), n étant un entier positif supérieur à 2 et m étant un entier positif supérieur à 2.

6. La structure de la couche extérieure d'un objet fourré selon la revendication 5, dans laquelle le premier composant en tissu (11) comprend un p-ième point d'aiguille d'entrée (2301, 2303, 23051) et un p-ième point d'aiguille d'entrée (2302, 2304, 2305) près du troisième bord (23), p étant un entier positif supérieur à 0, et le second composant en tissu (12) comprend un q-ième point d'aiguille d'entrée (2401, 2403, 2405) et un q-ième point d'aiguille de sortie (2402, 2404, 24051) près du quatrième bord (24), q étant un entier positif supérieur à 0, où lorsque p est égal à q, le p-ième point d'aiguille de sortie (2302, 2304, 2305) près du troisième bord (23) correspond au q-ième point d'aiguille d'entrée (2401, 2403, 2405) près du quatrième bord (24) et le q-ième point d'aiguille d'entrée (2402, 2404, 24051) près du quatrième bord (24) correspond au (p+1)-ième point d'aiguille d'entrée (2303, 23051) près du troisième bord (23).

7. La structure de la couche extérieure d'un objet fourré selon la revendication 6, dans laquelle le p-ième point d'aiguille d'entrée (2301, 2303, 23051) et le p-ième point d'aiguille de sortie (2302, 2304, 2305) près du troisième bord (23) sont entrelacés et disposés par intervalles l'un avec l'autre, p étant un entier positif supérieur à 0 et un premier point d'aiguille d'entrée (2301) près du troisième bord (23) se trouve près de la première extrémité (231) du troisième bord (23).

8. La structure de la couche extérieure d'un objet fourré selon la revendication 7, dans laquelle le q-ième point d'aiguille d'entrée (2401, 2403, 2405) et le q-ième point d'aiguille d'entrée (2402, 2404, 2406) près du quatrième bord (24) sont entrelacés et disposés par intervalles entre eux, q étant un entier positif supérieur à 0 et un premier point d'aiguille d'entrée (2401) près du quatrième bord (24) se trouve près de la première extrémité (241) du quatrième bord (24).

9. La structure de couche extérieure d'un objet fourré selon la revendication 8, dans laquelle le second fil de couture (4) passe séquentiellement à travers le premier point d'aiguille d'entrée (2306) près du troisième bord (23), le premier point d'aiguille de sortie (2302) près du troisième bord (23), le premier point d'aiguille d'entrée (2401) près du quatrième bord (24), le premier point d'aiguille de sortie (2402) près du quatrième bord (24), le second point d'aiguille d'entrée (2303) près du troisième bord (23), le second point d'aiguille de sortie (2304) près du troisième bord (23), le second point d'aiguille d'entrée (2403) près du quatrième bord (24), le second point d'aiguille de sortie (2404) près du quatrième bord (24),..., le p-ième point d'aiguille de sortie (2305) près du troisième bord (23), le q-ième point d'aiguille point d'aiguille d'entrée (2405) près du quatrième bord (24), le q-ième point d'aiguille de sortie (2406) près du quatrième bord (24), le (p+1)-ième point d'aiguille d'entrée (23051) près du troisième bord (23), p étant un entier positif supérieur à 2 et q étant un entier positif supérieur à 2.

10. La structure de couche extérieure d'un objet fourré selon la revendication 9, dans laquelle après que le second fil de couture (4) passe séquentiellement à travers le p-ième point d'aiguille de sortie (2302, 2304, 2306) près du troisième bord (23), le second fil de couture (4) passe à travers le point d'aiguille d'entrée (2401, 2403, 2405) près du quatrième bord (24), puis passe par le point d'aiguille de sortie (2402, 2404, 2406) près du quatrième bord (24), p étant un entier positif supérieur à 2 et q étant un entier positif supérieur à 2.

11. La structure de couche extérieure d'un objet fourré selon la revendication 5, dans laquelle le troisième bord (23) comprend un p-ième point d'aiguille d'entrée (2306, 2308, 2310) et un p-ième point d'aiguille de sortie (2307, 2309, 2311), p étant un entier positif supérieur à 0, et le quatrième bord (24) constitue un q-ième point d'aiguille d'entrée (2407, 2409, 2411) et un q-ième point d'aiguille de sortie (2406, 2408, 2410), q étant un entier positif supérieur à 0, où lorsque p est égal à q, le p-ième point d'aiguille d'entrée (2306, 2308, 2310) près du troisième bord (23) correspond au q-ième point d'aiguille de sortie (2406, 2408, 2410) près du quatrième bord (24) et au q-ième point d'aiguille d'entrée (2407, 2409, 2411) près du quatrième bord (24) correspond au p-ième point d'aiguille de sortie (2307, 2309, 2311) près du troisième bord (23).

12. La structure de couche extérieure d'un objet fourré selon la revendication 11, dans laquelle le p-ième point d'aiguille d'entrée (2306, 2308, 2310) et le p-ième point d'aiguille de sortie (2307, 2309, 2311) près du troisième bord (23) sont entrelacés et disposés par intervalles l'un avec l'autre, p étant un entier positif supérieur à 0 et un premier point d'aiguille d'entrée (2306) près du troisième bord (23) est près de la première extrémité (231) du troisième bord (23).

13. La structure de couche extérieure d'un objet fourré selon la revendication 12, dans laquelle le q-ième point d'aiguille d'entrée (2407, 2409, 2411) et le q-ième point d'aiguille de sortie (2406, 2408, 2410) près du quatrième bord (24) sont entrelacés et disposés par intervalles l'un avec l'autre, q étant un entier positif supérieur à 0 et un premier point d'aiguille de sortie (2406) près du quatrième bord (24) étant près de la première extrémité (241) du quatrième bord (24).

14. La structure de couche extérieure d'un objet fourré selon la revendication 13, dans laquelle le second fil de couture (4) passe séquentiellement à travers le premier point d'aiguille d'entrée (2306) près du troisième bord (23), le premier point d'aiguille de sortie (2406) près du quatrième bord (24), le premier point d'aiguille d'entrée (2407) près du quatrième bord (24), le premier point d'aiguille de sortie (2307) près du troisième bord (23), le second point d'aiguille d'entrée (2308) près du troisième bord (23), le second point d'aiguille d'entrée (2408) près du quatrième bord (24), le second point d'aiguille d'entrée (2409) près du quatrième bord (24), le second point d'aiguille de sortie (2309) près du troisième bord (23),..., le p-ième point d'aiguille d'entrée (2310) près du troisième bord (23), le q-ième point d'aiguille de sortie ( 2410) près du quatrième bord (24), le q-ième point d'aiguille d'entrée (2411) près du quatrième bord (24), le p-ième point d'aiguille de sortie (2311) près du troisième bord (23), p étant un entier positif supérieur à 2 et q étant un entier positif supérieur à 2.

15. Procédé de couture d'une structure de couche extérieure d'un objet fourré, comprenant :
coudre partiellement le long d'une périphérie d'au moins un premier composant en tissu (11) et d'une périphérie d'au moins un second composant en tissu (12) pour former un contenant (1) qui possède un espace d'accueil (10) à l'intérieur du contenant (1) ;
former une ouverture (2) dans une partie non cousue entre la périphérie d'au moins un premier composant en tissu (11) et la périphérie d'au moins un second composant en tissu (12), l'ouverture (2) étant reliée à l'espace d'accueil (10) et l'ouverture (2) comprenant un premier bord (21) et un second bord (22), le premier bord (21) étant situé d'un côté du premier composant en tissu (11) et possédant une première extrémité (211) et une seconde extrémité (212) ; et le second bord (22) étant situé sur un côté du second composant en tissu (12), possédant une première extrémité (221) et une seconde extrémité (222), et le second bord (22) correspondant au premier bord (21) formant l'ouverture (2), l'ouverture (2) ayant une première extrémité (201) et une seconde extrémité (202) ; dans lequel
le procédé de couture d'une structure de couche extérieure d'un objet fourré comprend en outre les étapes suivantes :
prolonger un premier fil de couture (3) de la première extrémité (201) de l'ouverture (2) jusqu'à la seconde extrémité (202) de l'ouverture (2) de sorte que le premier bord (21) et le second bord (22) correspondent l'un à l'autre, et l'ouverture (2) est brodée et fixée pour former une première couture (31) à l'ouverture (2), près du premier bord (21) et du second bord (22), la première couture (31) comprenant un troisième bord (23) et un quatrième bord (24), le troisième bord (23) se trouvant sur le premier composant en tissu (11) près du premier bord (21) et possédant une première extrémité (231) et une seconde extrémité (232), le troisième bord (23) étant sensiblement parallèle au premier bord (21) ; et le quatrième bord (24) étant situé sur le second composant en tissu (12) près du second bord (22) et possédant une première extrémité (241) et une seconde extrémité (242), le quatrième bord (24) étant sensiblement parallèle au second bord (22) ; et le procédé étant **caractérisé par** la réalisation en séquence :
prolonger un second fil de couture (4) de la première extrémité (231) du troisième bord (23) ou la première extrémité (241) du quatrième bord (24) à la seconde extrémité (232) du troisième bord (23) ou la seconde extrémité (242) du quatrième bord (24) de sorte que le troisième bord (23) correspond au quatrième bord (24), et le troisième bord (23) et le quatrième bord (24) sont cousus et fixés l'un à l'autre pour former une seconde couture (41) près du troisième bord (23) et du quatrième bord (24).
